Europäisches Patentamt

European Patent Office

Office européen des brevets

(19)

(11) EP 0 794 104 A2

(12) EUROPEAN PATENT APPLICATION

(43) Date of publication:
10.09.1997 Bulletin 1997/37

(51) Int. Cl.$^6$: B62D 6/00
// B62D113:00, B62D155:00

(21) Application number: 97103760.1

(22) Date of filing: 06.03.1997

(84) Designated Contracting States:
DE FR GB

(30) Priority: 06.03.1996 JP 48768/96

(71) Applicant:
YAMAHA HATSUDOKI KABUSHIKI KAISHA
Iwata-shi Shizuoka-ken, 438 (JP)

(72) Inventors:
• Miyazaki, Mitsuo,
  c/o Yamaha Hatsudoki K.K.
  Iwata-shi, Shizuoka-ken (JP)

• Uchiyama, Hidehiko,
  c/o Yamaha Hatsudoki K.K.
  Iwata-shi, Shizuoka-ken (JP)
• Arai, Katsuhiro,
  c/o Yamaha Hatsudoki K.K.
  Iwata-shi, Shizuoka-ken (JP)

(74) Representative: Grünecker, Kinkeldey,
  Stockmair & Schwanhäusser
  Anwaltssozietät
  Maximilianstrasse 58
  80538 München (DE)

(54) Electric motor vehicle

(57) An electric motor vehicle (1) comprises drive wheels (6a,6b) each provided with a separate electric drive motor. At least one wheel (5a,5b) is connected to said vehicle (1) such that said at least one wheel (5a,5b) is rotatable around a vertical axis being substantially perpendicular to the respective rotational axis of said at least one wheel (5a,5b). Said at least one wheel (5a,5b) is steerable by means of a steering device.

FIGURE 1

## Description

The present invention relates to an electric motor vehicle comprising drive wheels each provided with a separate electric drive motor, and at least one wheel connected to said vehicle such that said at least one wheel is rotatable around a vertical axis being substantially perpendicular to the respective rotational axis of said at least one wheel.

Note that for the purposes of the present invention, "steering" shall refer to the changing of direction by maneuvering the vehicle with a handle or the like.

As mentioned in Unexamined Published Japanese Utility Model Application (JP-A-U) No. S 62-72264, electric motor vehicles have hitherto comprised attaching, to the underside of the vehicle's loading bed, a pair of (two) drive wheels that are linked to separate motors and two castor wheels that are free to change direction. This conventional electric motor vehicle changes its direction by changing the rotational speeds of the left and right drive motors, thereby bringing about a difference between the rotational speeds of the left and right drive wheels and turning to the left or to the right, the castor wheels changing direction freely as they turn round to follow the turning of the vehicle.

However, a conventional electric motor vehicle is configured such that steering is performed only by the drive wheels, while the castor wheels are simply attached with the ability to change direction by free rotation with respect to the vehicle so that their direction changes by tracking the progress of the vehicle; consequently they have suffered from the problem that, when maneuvering through a large angle with a small turning radius the castor wheels are unable to track smoothly and exert a braking action that causes sudden changes in speed and impairs the running stability. Accordingly, it has been necessary to turn through a large turning and/or radius when maneuvering and to drive to and fro repeatedly when changing direction in confined spaces and through sharp angles; also, there has been a lack of load-carrying stability due to lack of smoothness in the driving characteristics and steering characteristics.

Accordingly, it is an objective of the present invention to provide an improved electric motor vehicle as indicated above facilitating to smoothly and stably change directions even with small turning radii.

According to the present invention, this objective is solved for an electric motor vehicle as indicated above in that said at least one wheel is steerable by means of a steering device.

A further improvement of the steerability is achievable when a control means is provided for controlling the output of the respective electrical drive motors.

According to an advantageous and preferred embodiment of the present invention, the respective rotational axes of said steerable or steering wheels intersect at a point substantially lying at least on the extension of the common rotational axis of said drive wheels when said steering wheels are turned for steering.

A still further facilitation of the improved steerability is achievable when said control means is adapted to set the ratio of rotational speeds of said drive wheels based on a ratio of the distances between said point of intersection to the contact points of the drive wheels with the ground.

According to an advantageous embodiment of the present invention, said control means comprises a computation circuit adapted to reduce the wheel speed of the drive wheels in accordance with the increase or decrease, respectively, of the turning radius of the one or two, respectively, steering wheels.

In addition, it is possible that said electric motor vehicle may comprise a steering amount detecting means for detecting the respective steering amount and for producing respective signals.

In that case, it is advantageous when said control means is adapted to compute the ratio of the rotational speeds of the drive wheels in accordance with the output of said steering amount detection means.

In a preferred implementation, said control means it has a computation circuit configured so as to reduce the speed of the vehicle according to the decrease in the turning radius when the vehicle maneuvers.

In another preferred implementation, said steering means it is provided with a steer amount detection means, and said control means it computes the ratio of the rotational speeds of each of said drive wheels based on the detected result of this steer amount detection means.

In another preferred implementation, said steering means it has a steer direction display means.

Other preferred embodiments of the present invention are laid down in further dependent claims.

In the following, the present invention is explained in greater detail with respect to several embodiments thereof in conjunction with the accompanying drawings, wherein:

[Figure 1] A diagram of the basic structure of an embodiment of the present invention,

[Figure 2] A diagram of an embodiment of the present invention during straight-line motion,

[Figure 3] A diagram of an embodiment of the present invention while turning on a point,

[Figure 4] A top view of an embodiment of the present invention,

[Figure 5] A side view of an embodiment of the present invention,

[Figure 6] A front view of an embodiment of the present invention,

[Figure 7] A detailed view of the drive system of an embodiment of the present invention,

[Figure 8] A detailed view of a steering wheel of an embodiment of the present invention,

[Figure 9] A diagram of the gearbox of an embodiment of the present invention,

[Figure 10] A graph of the relationship between steering angle and inside wheel speed in the present invention,

[Figure 11] A sketch showing the average wheel speed computation map of the present invention, and

[Figure 12] A control block diagram of the drive motors of the present invention.

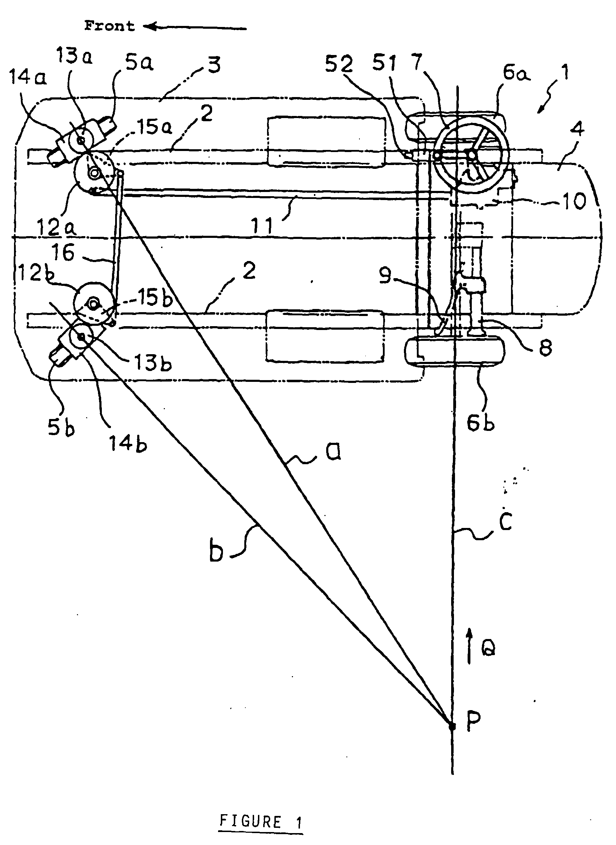

Figure 1 is a top view for describing the basic configuration of an electric motor vehicle according to an embodiment of the present invention. This electric motor vehicle 1 is provided with loading bed 3 which is mounted on base frame 2, and passenger step 4 provided to the rear thereof. This loading bed 3 may be of the lifting type mentioned below, or may be of a fixed type. A pair of left and right steering wheels 5a and 5b are attached at the front, and similarly a pair of left and right drive wheels 6a and 6b are attached at the rear of base frame 2 at the underside of loading bed 3. As mentioned below, these two drive wheels 6a and 6b are individually driven by separate drive motors, but they are attached to base frame 2 in a fixed direction (perpendicular) with their rotational axes C in constant alignment, and drive the vehicle forward and backward.

On the other hand, steering wheels 5a and 5b are attached with to base frame 2 with the ability to change direction, the two steering wheels being linked together so that the angles or radii of rotation a and b of each steering wheel intersect with a single point P on rotational axis c of drive wheels 6a and 6b. This point of intersection P forms the turning center of electric motor vehicle 1. In the figure it is shown turning to the left.

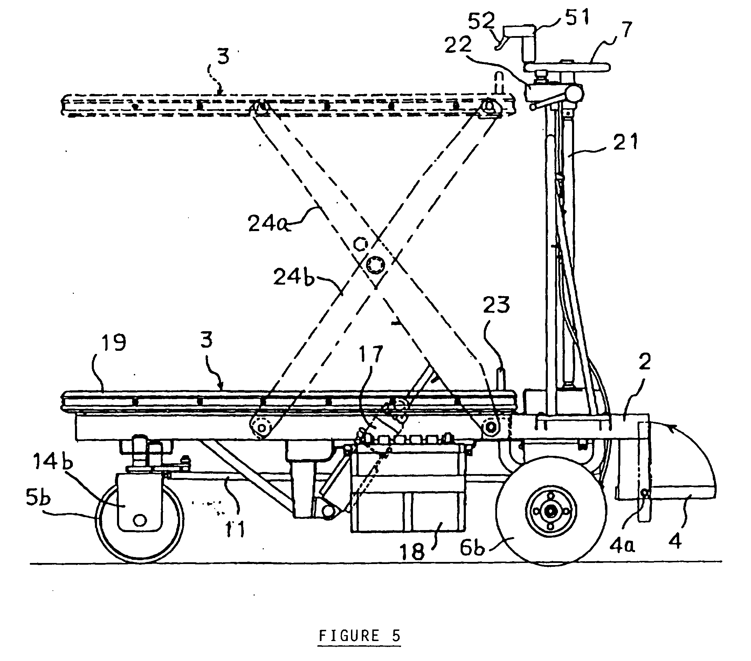

Handle 7 is provided above and to the right of passenger step 4, while grip 8 and brake lever 9 are provided on the left. Accelerator grip 51, which has an accelerator actuator 52, is provided on handle 7 with ability to rotate (see Figure 5). This handle 7 is linked to gearbox 10 attached to the underside of loading bed 3, and is linked to connecting rod 11 from this gearbox 10. The end of connecting rod 11 is hinged to steering gear 12a at the side of one of the steering wheels 5a. This steering gear 12a is mounted so as to engage with gear 13a which is fixed to supporting frame 14a of steering wheel 5a. In this way, steering gear 12a turns via connecting rod 11 according to the operating quantity of handle 7, and this rotation is transmitted to gear 13a to change the direction of steering wheel 5a.

Bracket 15a is fixed to steering gear 12a, and one end of linking rod 16 is hinged to this bracket 15a. The other end of linking rod 16 is hinged to bracket 15b, which is fixed to steering gear 12b of the other steering wheel 5a. In this way, steering gear 12b of one steering wheel 5b rotates according to the amount of rotation of the other steering wheel 5a, and the direction of steering wheel 5b changes via gear 13b. At this time, dimensions such as the length of linking rod 16 and the attachment angles of brackets 15a and 15b are set so that, as mentioned above, the rotational axes a and b of both steering wheels 5a and 5b are always made to intersect with a single point P on rotational axis c of drive wheels 6a and 6b.

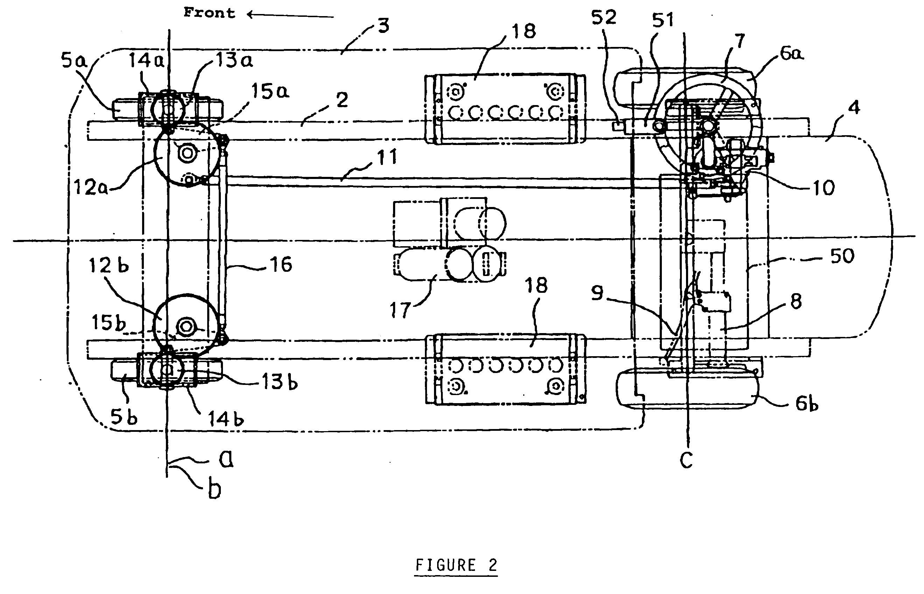

Figure 2 is a more detailed plan view of an electric motor vehicle relating to the abovementioned embodiment. This figure shows the state of the vehicle when moving in a straight line, where both steering wheels 5a and 5b point in the same direction as drive wheels 6a and 6b with their rotational axes a and b aligned and parallel with rotational axis c (the point of intersection P being at infinity). In this figure, 17 is a cylinder device for lifting up loading bed 3, and 18 is a battery. Also, 50 is a controller incorporating a CPU for control computation processing.

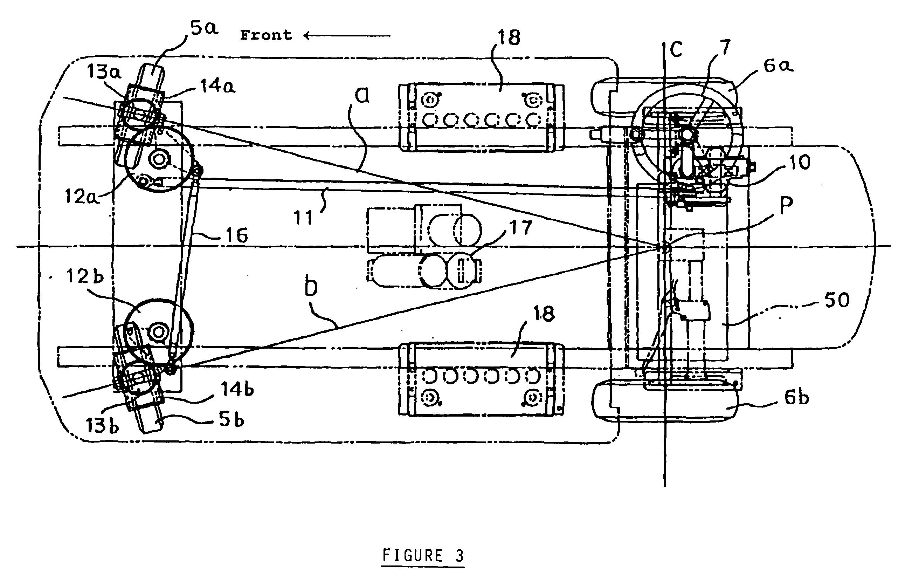

As shown in the figure, the track of the steering wheels (i.e. the distance between the wheels) is narrower than the track of the driving wheels. This is to keep the steering wheels from projecting beyond the edges of loading bed 3 when they are turned, even in the sharpest possible turn as shown in Figure 3.

Figure 3 shows the state of the motor vehicle of Figure 2 when turning on the spot. In this case, the point of intersection P of rotational axes a, b and c is a position mid-way between the two drive wheels 6a and 6b. By turning drive wheels 6a and 6b in opposite directions at equal speed, the vehicle turns centered on intersection point P.

Changes in the direction of steering wheels 5a and 5b such as the above are made by operating handle 7. For example, by operating handle 7 so as to turn to the right (in the forward direction) from the straight-line state of Figure 2, steering wheels 5a and 5b begin to slant and as the operating quantity of handle 7 (the steering angle) is increased, the intersection point P of rotational axes a and b moves (as shown by arrow Q in Figure 1) along rotational axis c of the drive wheels toward the vehicle from a point at infinity on the side of the inside wheel (the wheel on the side in the direction of the turn). Accordingly, the position of intersection point P is determined according to the steering angle, and the vehicle turns centered on this intersection point P. In this case, both drive wheels 6a and 6b turn in the same direction, with their relative speeds being proportional to the distance from point P at the center of turning to each of the drive wheels 6a and 6b. In this case, since the position of the turning center point P is determined according to the steering angle at which the handle is operated, it is possible to compute the speed ratio based on a detection of the steering angle (see below).

When handle 7 is turned even further, the turning center point P arrives over the point where the inner wheel side drive wheel 6b contacts the ground. In this state, the rotation speed of this inner wheel side drive wheel 6b is zero.

When handle 7 is turned further still, the turning center point P moves over rotational axis C between the two drive wheels 6a and 6b. In this state, the two drive wheels 6a and 6b rotate in opposite directions. Here, when the turning center point P reaches the mid-point between the two drive wheels 6a and 6b (as shown in Figure 3), the two drive wheels rotate in opposite directions at the same rotational speed, and the vehicle turns on the spot.

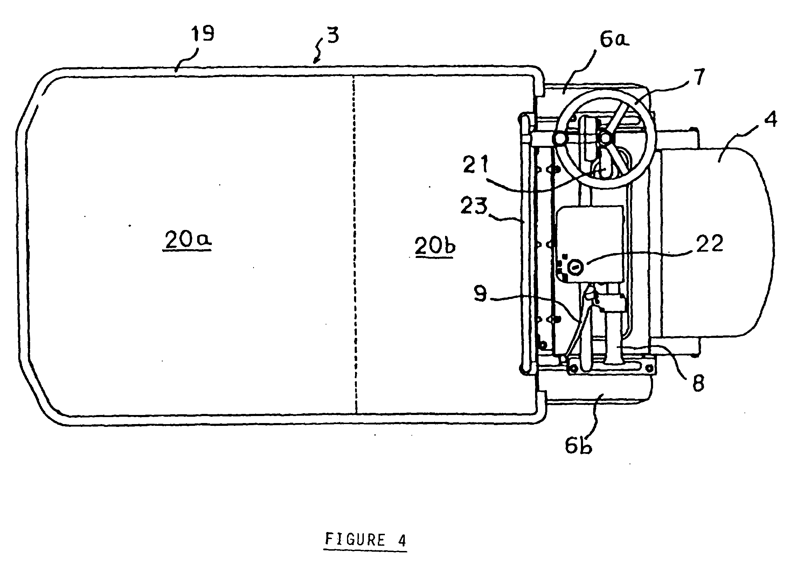

Figures 4, 5 and 6 are top, side and rear views respectively showing the exterior of an electric motor vehicle relating to the present invention. Loading bed 3 consists of a frame part 19 that constitutes its outer edge, and two base plates 20a and 20b inside this frame part 19. The base plates 20a and 20b consist of, for example, iron plates with rubber sheets spread out on top. Base plate 20b, which is closer to the passenger step side, has a handgrip 23 and can easily be lifted up to free the underside. In this way it is easy to perform maintenance operations on battery 18, which in mounted underneath loading bed 3.

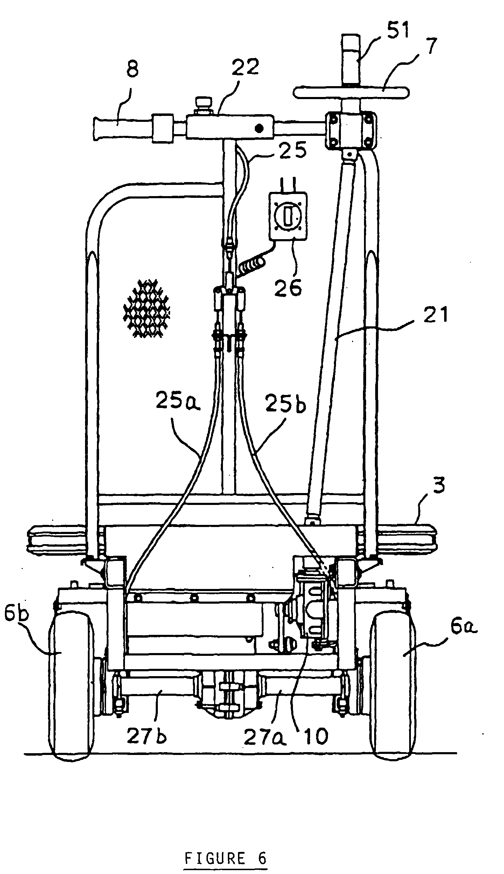

Operating box 22 is provided roughly centrally at the top of the driving platform part, and by operating main switches for example it is able to operate the lift of loading bed 3, and can switch between driving states such as forward, reverse and stationary. Base frame 2 of loading bed 3 is provided with lifting arms 24a and 24b for lifting up this loading bed 3 (Figure 5). These lifting arms are driven by lifting cylinder device 17 to lift up loading bed 3. A remote control switch 26 (Figure 6) is provided to enable the operator to perform lift operations with loading bed 3 even when dismounted from the vehicle. The shaft of handle 7 is linked to gearbox 10 via a rotary transmission rod 21.

Brake lever 9 (Figure 4) branches into two wires 25a and 25b via brake cable 25 (Figure 6), and is linked to drum brakes on each wheel 6a and 6b. The wheels 6a and 6b each have separate axles 27a and 27b.

As shown in Figure 5, passenger step 4 is configured to flip up about shaft 4a so as not to get in the way when putting the vehicle away and when pushing the vehicle manually.

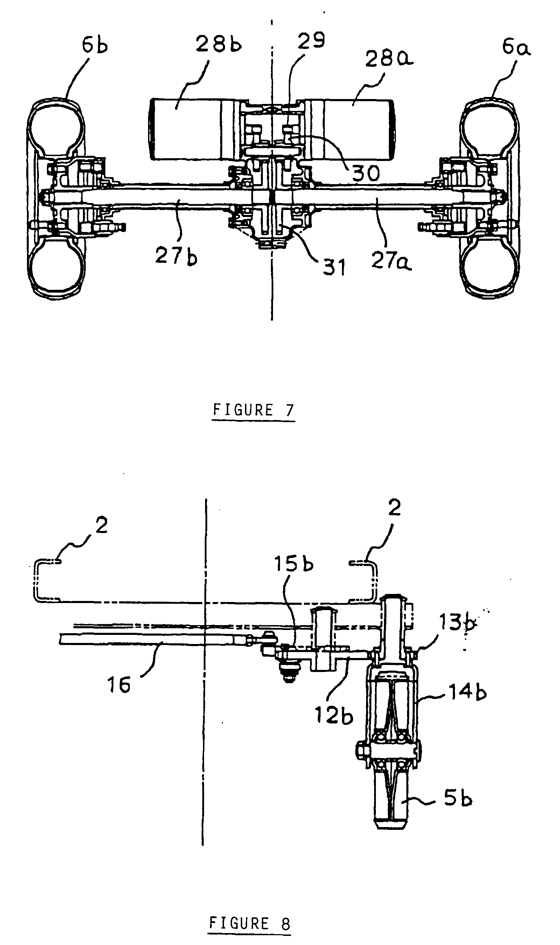

Figure 7 is a detailed view of the drive system. Individual drive motors 28a and 28b are provided corresponding to each drive wheel 6a and 6b. Reduction gears 30 and 31 are linked to the output shaft 29 of each drive motor, and transmit the rotary output of the motors to each axle 27a and 27b by stepping down the speed and increasing the torque.

Figure 8 is a detailed view of one of the steering wheels 5b. As mentioned above, the two steering wheels are linked by linking rod 16, and the end of linking rod 16 is hinged to bracket 15b, which is fixed to steering gear 12b. Steering gear 12b engages with gear 13b which is fixed to supporting frame 14b of steering wheel 5b.

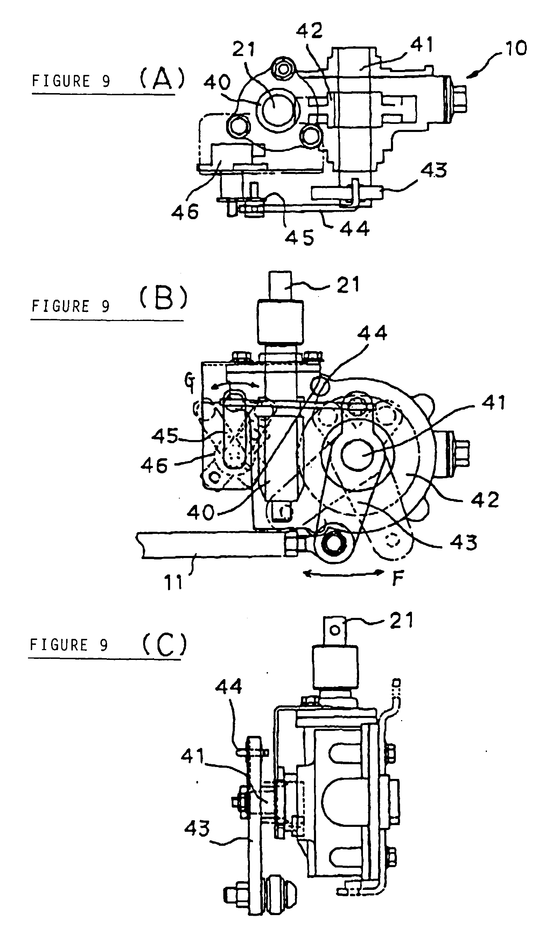

Figure 9 is a detailed view of gearbox 10 for transmitting the operating quantity of handle 7, where (A) is a top view, (B) is a side view, and (C) is a rear view. Worm gear 40 is provided at the end of rod 21 linked to the shaft of the handle. Linking lever 43 is fixed to the shaft 41 of a wheel 42 that engages with this worm gear 40. The abovementioned connecting rod 11 is hinged to one end of this linking rod 43. In this way, rotation of the handle is transmitted via worm gear 40 and wheel 42 to linking lever 43, which pivots as shown by arrow F. This rotational pivoting action is transmitted to the steering wheels via connecting rod 11.

Meanwhile, the other end of linking lever 43 is linked to actuator lever 45 via link pin 44. This actuator lever 45 is fixed to the shaft of a rotary variable resistor 46. In this way, the rotary action of linking lever 43, which is rotated by operating the handle, is transmitted via link pin 44 to actuator lever 45, which is made to pivot as shown by arrow G. The resistance value of variable resistor 46 is thereby changed, making it possible to detect the steering angle according to the operating quantity of the handle. This rotary variable resistor 46 may be provided at any position on the steering force transmission path between handle 7 and the steering wheels, but by providing it at a position near the controller, the amount of wiring and the like is reduced, making the configuration simpler and reducing the risk of breaks in the circuit.

Note that although a mechanical direct-drive handle has been cited as the steering means, wired or wireless remote control operation is also possible. In the case of remote control, the motive power of a steering motor or the like is added.

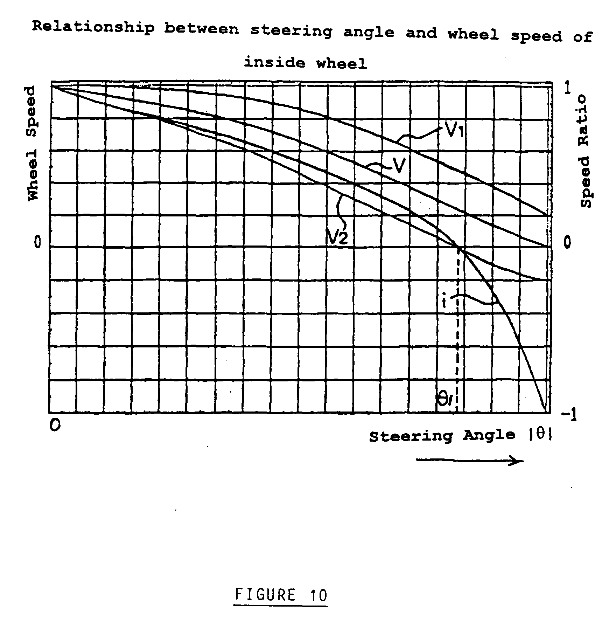

Figure 10 shows a graph of the relationship between the steering angle (steer angle) and the wheel speeds of the inside and outside drive wheels. $V_1$ is the wheel speed of the outer wheel when turning, and $V_2$ is the wheel speed of the inner wheel when turning. V is the average wheel speed, which expresses the speed of the mid-point between the inside wheel and outside wheel. Also, i expresses the speed ratio of the inside wheel.

As shown in the figure, at a steer angle of zero the wheel speeds of both drive wheels (the inside and outside wheels) are at their largest and are equal (unity speed ratio), and as the steer angle increases - i.e. as the turning radius is made smaller - the wheel speeds get smaller and smaller in a smoothly continuous fashion. At a steer angle of $\theta_1$, the wheel speed $V_2$ of the inner wheel becomes zero. This is the state where the intersection point P of rotational axes a and b of the steering wheels (the turning center point) shown in Figure 1 above arrives over the point where the inside wheel (drive wheel 6b) contacts the ground. As the steer angle is further increased, the wheel speed $V_2$ of the inside wheel becomes negative - that is, it turns in reverse. This is the state wherein the abovementioned turning center point P has entered in between the inside and outside wheels. The average wheel speed V gets smaller and smaller in a smoothly continuous fashion, becoming zero in the state where the inside and outside wheels are turned at the same speed in opposite directions, in which state the vehicle turns on the spot as shown in Figure 3.

The speed ratio i is a function of the steer angle $\theta$, and is expressed by $i = f(|\theta|) = V_2/V_1$. This speed ratio i is always expressed by the above formula, irrespective of the accelerator operation. In this formula, if $\theta > 0$ for,

say, a right turn, then $V_2$ (inside wheel) = $V_R$ (right wheel) and $V_1$ (outside wheel) = $V_L$ (left wheel), while for a left turn $\theta < 0$, $V_2 = V_L$ and $V_1 = V_R$.

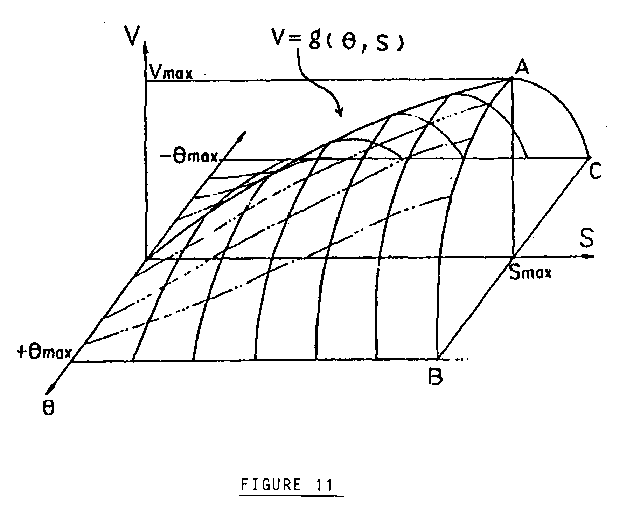

Figure 11 shows a three-dimensional map of the speed computation. Here, V is the average wheel speed, $\theta$ is the steer angle (in the present embodiment, this corresponds to the rotation angle of the handle), and S is the acceleration operating quantity. This figure shows the case of forward motion. Reverse motion is switched into by a switch on operating box 22 (Figure 4) as mentioned above, the average wheel speed V during reverse motion being 0.6 times that of forward motion.

In this map, the average wheel speed V is a function of the steer angle $\theta$ and the acceleration operating quantity S, and is expressed by $V = g(\theta, S)$. For a given acceleration operating quantity S, the average wheel speed V is largest when $\theta = 0$ (straight-line motion). Accordingly, at point A where the acceleration is at its maximum ($S_{max}$) and $\theta = 0$, the average wheel speed V reaches its maximum $V_{max}$. The line $\theta = +\theta_{max}$ through point B corresponds to the sharpest right turn where V = 0 and the vehicle turns on the spot. Also, the line $\theta = -\theta_{max}$ through point C corresponds to the sharpest left turn where V = 0 and the vehicle turns on the spot in the opposite direction.

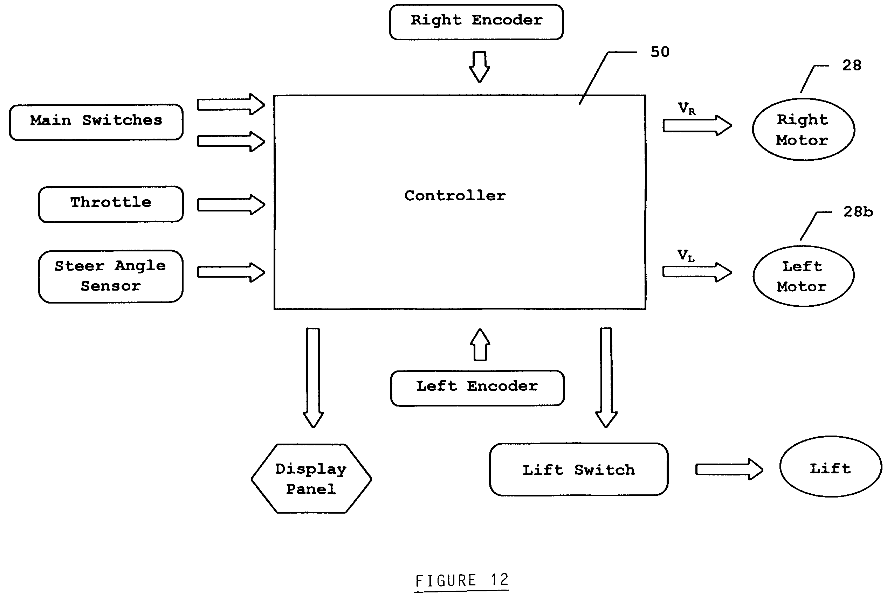

Figure 12 shows a block diagram of the drive motor control. A forward/reverse switching signal and a lift drive command signal are input to the CPU inside controller 50 from the main switches on the operating box. Also, a speed instruction signal is input to the CPU from the throttle (accelerator lever 8), and a steer angle signal is input from the steer angle sensor (variable resistor 46), being positive for a right turn and negative for a left turn. Also, the actual wheel speeds are measured from left and right encoders provided on the drive wheels, and are input to the CPU.

Based on this input data, the CPU computationally determines and outputs the speeds $V_L$ and $V_R$ of the left and right drive wheels as follows. That is, for the case of a left turn,

$$\text{speed ratio } i = f(|\theta|) \qquad (1)$$
$$= V_R/V_L \ (V_L/V_R \text{ for a right turn})$$

$$\text{average wheel speed } V = g(\theta, S) \qquad (2)$$
$$= (V_L + V_R)/2$$

whereby the values of $V_L$ and $V_R$ are determined so as to satisfy relationships (1) and (2).

The resulting computed data for $V_L$ and $V_R$ is sent to the left and right drive motors 28a and 28b (Figure 7) as speed instruction signals, based on which the left and right drive wheels 6a and 6b are respectively driven to obtain the specified average speed according to the map of Figure 11. The CPU also displays the vehicle's direction of progress on the display panel, based on the above data. This display makes it easy to see whether the steering is turned to the left or right when driving is interrupted and then restarted, preventing the vehicle from being started up in the opposite direction to the intended direction and thus improving the handling of the vehicle and its operating characteristics.

The CPU also drives the lift mechanism (lifting cylinder device 17) up and down by sending a drive signal to the lift switch based on the lift on/off signal from the main switches. Note that a structure is adopted whereby this lifting action cannot be performed while the vehicle is in motion. For example, this could be a structure wherein a separate "lift" position is provided on the forward/reverse switch, and the lift cannot be operated unless the switch is in this position.

Note that although the embodiment calls for a two-wheel structure comprising a pair of steering wheels 5a and 5b, it is also possible to provide just one wheel in the center of the vehicle. Moreover, the present invention can also be applied to electric motor vehicles that run automatically.

As described above, since the present invention is an electric motor vehicle having two drive wheels provided with their rotational axes in alignment, drive motors provided separately for each of said drive wheels, one or two steering wheels that are used to change the direction of progress, and a steering means for operating the direction of progress by changing the directions of the rotational axes of said steering wheels, configured with the rotational axes of said one or two steering wheels and the rotational axis of said drive wheels being parallel or intersecting at a single point, and provided with a control means that sets the ratio of rotational speeds of said drive wheels based on the ratio of the distances from the intersection of said rotational axes to each of said drive wheels, it is able to change the turning radius in a smoothly continuous fashion between straight-line motion and turning on a point, thereby improving its driving feel and making it possible to drive stably even when turning with a small radius, and making it easy to maneuver in confined spaces.

Also, since the vehicle has a computation circuit configured so as to reduce the wheel speed as the turning radius becomes smaller while maneuvering, it is possible to enhance further the driving feel while turning and to achieve stabilized operation.

Also, by providing a means for detecting the steering amount of the steering means and computing the relative rotational speeds of each of said drive wheels based on the detection result of this steering amount detection means, it is possible to make the turning center points of each wheel converge on a single point with high precision, thereby achieving highly precise speed control.

## Claims

1. Electric motor vehicle (1) comprising drive wheels (6a, 6b) each provided with a separate electric drive motor (28a, 28b), and at least one wheel (5a, 5b) connected to said vehicle such that said at least one wheel (5a, 5b) is rotatable around a vertical axis being substantially perpendicular to the respective rotational axis (a, b) of said at least one wheel (5a, 5b), **characterized in that** said at least one wheel (5a, 5b) is steerable by means of a steering device (7, 10, 11, 12).

2. Electric motor vehicle according to claim 1, **characterized by** a control means (50) for controlling the output of the respective electrical drive motors (28a, 28b).

3. Electric motor vehicle according to claim 1 or 2, comprising two steerable wheels (5a, 5b), **characterized in that** the respective rotational axes (a, b) of said steerable or steering wheels (5a, 5b) intersect at a point (P) substantially lying at least on the extension of the common rotational axis (C) of said drive wheels (6a, 6b) when said steering wheels (5a, 5b) are turned for steering.

4. Electric motor vehicle according to claim 3, **characterized in that** said control means (50) is adapted to set the ratio of rotational speeds ($V_L$, $V_R$) of said drive wheels (6a, 6b) based on a ratio of the distances between said point (P) of intersection to the contact points of the drive wheels (6a, 6b) with the ground.

5. Electric motor vehicle according to at least one of the proceding claims 2 to 4, **characterized in that** said control means (50) comprising a computation circuit adapted to reduce the wheel speed of the drive wheels (6a, 6b) in accordance with the increase or decrease, respectively, of the turning radius of the one or two, respectively, steering wheels (5a, 5b).

6. Electric motor vehicle according to at least one of the preceding claims 1 to 5, **characterized in that** said steering device (7, 10, 11, 12) comprising a steering amount detecting means (46).

7. Electric motor vehicle according to claim 6, **characterized in that** said control means (50) is adapted to compute the ratio of the rotational speeds ($V_L$, $V_R$) of the drive wheels (6a, 6b) in accordance with the output of said steering amount detection means (46).

8. Electric motor vehicle according to at least one of the preceding claims 1 to 7, **characterized in that** said steering device (7, 10, 11, 12) comprising a steering direction display means.

9. Electric motor vehicle according to at least one of the preceding claims 3 to 8, **characterized in that** said steering wheels (5a, 5b) are linked together by means of a linking rod (16).

10. Electric motor vehicle according to claim 9, **characterized in that** each steering wheel (5a, 5b) comprising a steering gear (12a, 12b) being connected by said linking rod (16).

11. Electric motor vehicle according to at least one of the preceding claims 3 to 10, **characterized in that** the track of the steering wheels (5a, 5b) is narrower than that of the driving wheels (6a, 6b).

12. Electric motor vehicle according to at least one of the preceding claims 4 to 11, **characterized in that** said speed ratio (i) is dependent on the steering angle according to the equation

$$i = f\,(|\Theta|) = \frac{V_2}{V_1}$$

with

$V_1$ = speed of outside wheel,
$V_2$ = speed of inside wheel.

13. Electric motor vehicle according to at least one of the preceding claims 2 to 12, **characterized in that** said control means (50) comprising a three-dimensional map for speed computation.

Front ←

FIGURE 1

FIGURE 2

FIGURE 3

EP 0 794 104 A2

FIGURE 4

FIGURE 5

FIGURE 6

FIGURE 7

FIGURE 8

13

FIGURE 9 (A)

FIGURE 9 (B)

FIGURE 9 (C)

Relationship between steering angle and wheel speed of
inside wheel

FIGURE 10

15

FIGURE 11

Right Motor — 28

Left Motor — 28b

Lift

Right Encoder

Controller — 50

Left Encoder

Lift Switch

Main Switches

Throttle

Steer Angle Sensor

Display Panel

$V_R$

$V_L$

FIGURE 12